# EUROPEAN PATENT SPECIFICATION

(11) **EP 4 291 846 B1**
(45) Date of publication and mention of the grant of the patent: **29.01.2025**
(21) Application number: 22703090.5
(22) Date of filing: 03.02.2022
(51) Int. Cl.: F28D 9/00, F28F 9/02

(54) **EVAPORATOR ASSEMBLY**
VERDAMPFERANORDNUNG
ENSEMBLE ÉVAPORATEUR

(30) Priority: 10.02.2021 IT 202100002951
(43) Date of publication of application: 20.12.2023
(73) Proprietor: UFI Innovation Center S.r.l., 38061 Ala (TN) (IT)
(72) Inventor: GIRONDI, Giorgio, 38061 Ala, Trento (IT)
(74) Representative: Gamba, Alessandro
(86) International application number: PCT/IB2022/050936
(87) International publication number: WO 2022/172136

(56) References cited:
- DE-A1- 102016 006 127
- GB-A- 2 112 918
- US-A- 5 896 835
- US-A1- 2015 316 330
- US-B1- 8 375 917

## Description

### Field of application

The present invention relates to an evaporator assembly.

In particular, the present invention relates to the automotive field.

In fact, the evaporator assembly of the present invention is fluidly connectable to a refrigerant fluid circulation circuit and to a cooling circuit of an operating unit in which the cooling liquid comprised in a vehicle flows. The evaporator assembly of the present invention is suitable for performing heat exchange operations between the refrigerant fluid and the cooling liquid. The evaporator assembly of the present invention is suitable for managing the physical properties, in particular the temperature, of the refrigerant fluid to therefore allow the management of an effective heat exchange with the cooling liquid so as to obtain an effective temperature management of the operating unit.

In particular, the term "operating unit" refers to a component of the vehicle suitable for performing specific operations. For example, preferably, the operating unit is a battery pack, or a motor unit, preferably of the electrically powered type, or an electronic control unit. In particular, preferably, in operation, the operating unit can reach high temperatures, thus requiring a specific cooling action.

Preferably, the term "cooling circuit" of an operating unit refers to a group of components and conduits operatively connected to said operating unit. This group of components and conduits define a fluid path for a cooling liquid, typically water-based, typically comprising water and glycol, which manages the temperature of the operating unit by heat exchange.

Preferably, the term "refrigerant fluid circulation circuit" in the present description means a group of components and conduits that are operatively connected to each other, comprising for example a condenser unit, a dryer unit, a compressor unit. For example, the refrigerant fluid circulation circuit is suitable for managing the air temperature of the HVAC system, i.e., of the vehicle air conditioning system. This group of components and conduits defines a fluid path for a refrigerant fluid, which by heat exchange manages the temperature, for example, of the air in the HVAC system.

Preferably, "refrigerant fluid" means a fluid which has a chemical composition that allows it to undergo a phase change at temperature and pressure values compatible with the operation of the circulation circuit.

In the present discussion, refrigerant fluid means one of the operating fluids normally used in a refrigeration cycle such as, for example, R134a, R744, R290, R718, R717, R1234yfa.

In still other words, the evaporator assembly is suitable for performing heat exchange operations between the cooling liquid and the refrigerant fluid, resulting in a junction node of the two vehicle circuits.

### Background art

Specifically, evaporator assemblies suitable for managing the temperature of the refrigerant fluid circulating in the circulation circuit are known in the state of the art. In particular, the management of the refrigerant fluid temperature is also performed by managing the physical state of the refrigerant fluid, appropriately exploiting the state changes thereof, in particular the state changes from liquid to gaseous.

In particular, the phase change of the refrigerant fluid and the related variations in temperature and pressure are exploited to remove heat from the cooling liquid coming from the operating unit.

In particular, the evaporator assemblies, also known on the market with the name "chiller," comprise a heat exchanger which performs heat exchange operations between the refrigerant fluid and the cooling liquid circulating towards the operating unit (for example, the battery pack) and in a position fluidly upstream of said heat exchanger comprise at least one lamination member, preferably an expansion valve, in which the refrigerant fluid undergoes a sudden pressure and temperature variation.

A typical problem of the solutions of evaporator assemblies known on the market is that of best managing, i.e., in an extremely effective and efficient manner, the modes according to which the state change of the refrigerant fluid occurs as well as the gaseous state thereof inside the heat exchanger.

In the solutions of the state of the art, the management of the physical state of the refrigerant fluid is typically entrusted to the specific expansion valves comprised in the evaporator assemblies or to the presence of specific bottlenecks, such as an orifice tube, in the fluid path. An example of said known solution is disclosed in document DE102016006127A1.

### Solution of the invention

The need is therefore strongly felt to provide an evaporator assembly in which the management and control of the physical state of the refrigerant fluid is performed in an effective, efficient and controlled manner.

Fulfilling this need also leads to responding to a further need particularly felt in the automotive field, i.e., to achieve effective management of the temperature of both the refrigeration system in which the refrigerant fluid flows and the cooling system of the operating unit in which the cooling liquid flows.

The object of the present invention is therefore to provide an evaporator assembly which meets the above requirements.

Such an object is achieved by means of the evaporator assembly claimed in claim 1. The claims dependent thereon show preferred variants implying further advantageous aspects.

### Description of the drawings

Further features and advantages of the invention will become apparent from the description provided below of preferred exemplary embodiments thereof, given by way of non-limiting example, with reference to the accompanying drawings, in which:

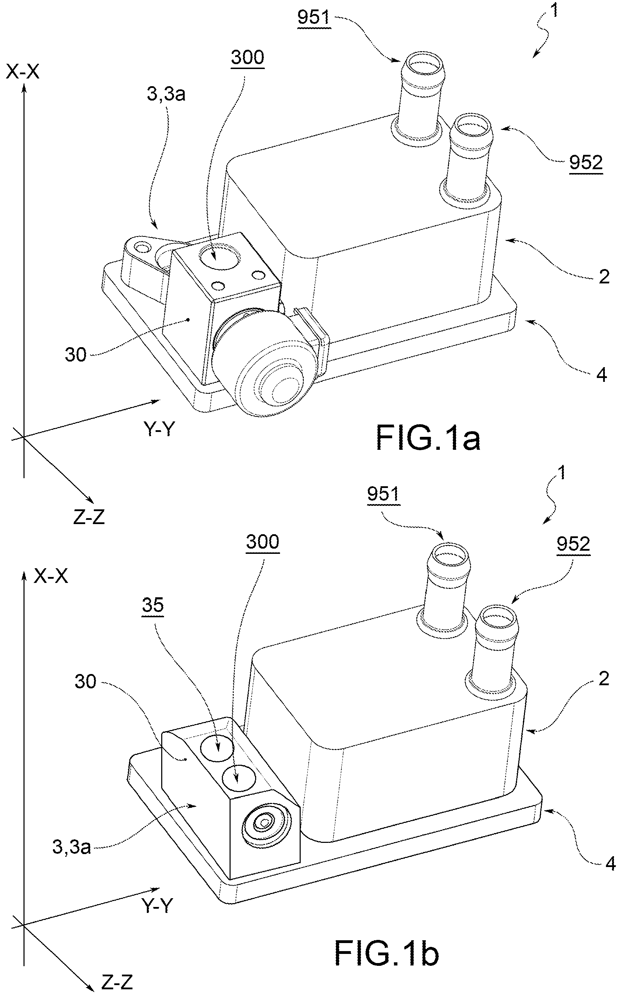

- figures 1a and 1b show two perspective views of the evaporator assembly in accordance with two preferred embodiments according to the present invention;

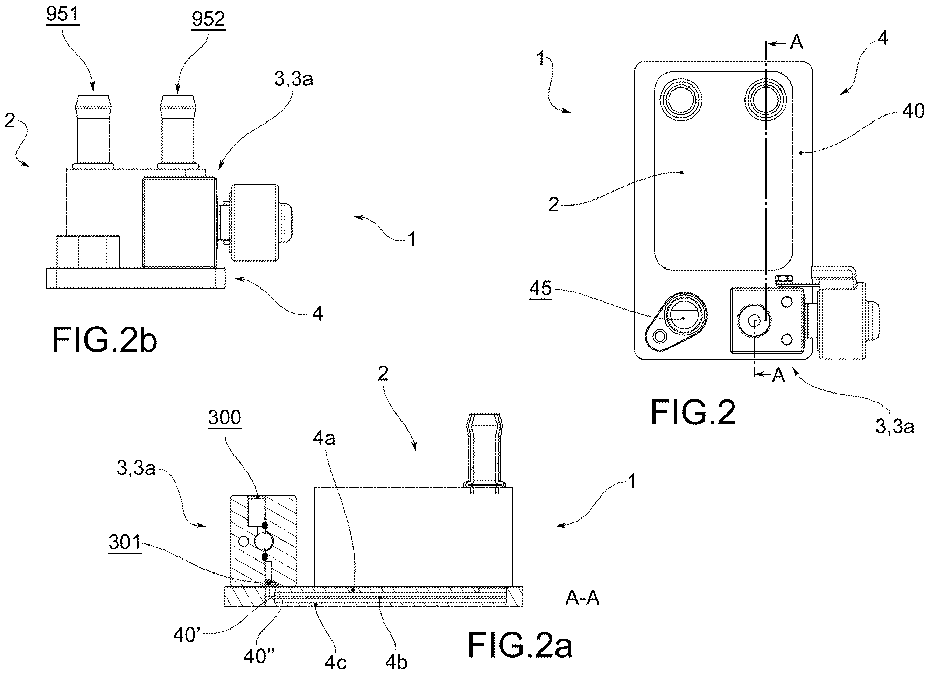

- figures 2, 2a and 2b show a top view of the evaporator assembly in accordance with figure 1a, and respectively a sectional view along the section plane A-A of figure 2 and a front view;

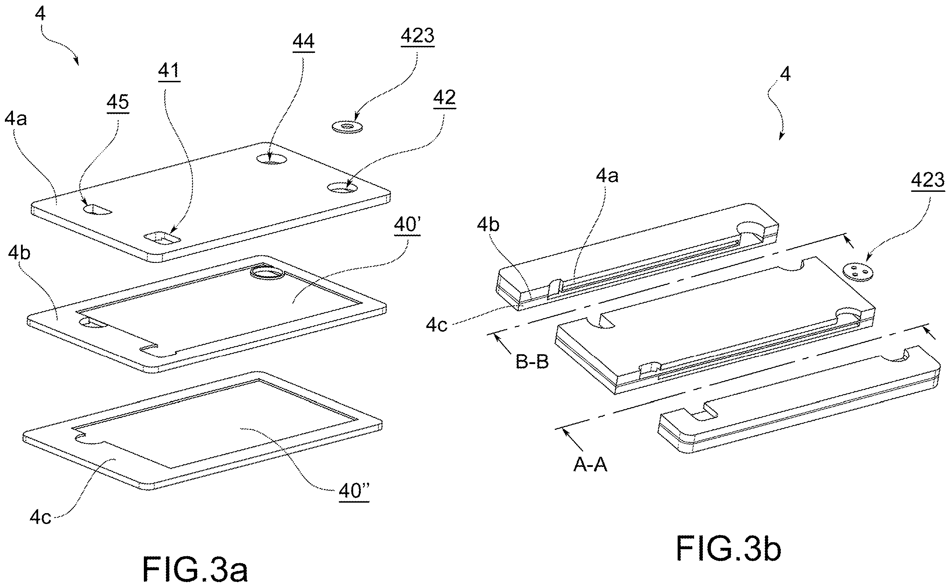

- figures 3a and 3b depict a perspective view with separate parts and an assembled and sectioned perspective view of a base body comprised in the evaporator assembly of the preceding figures;

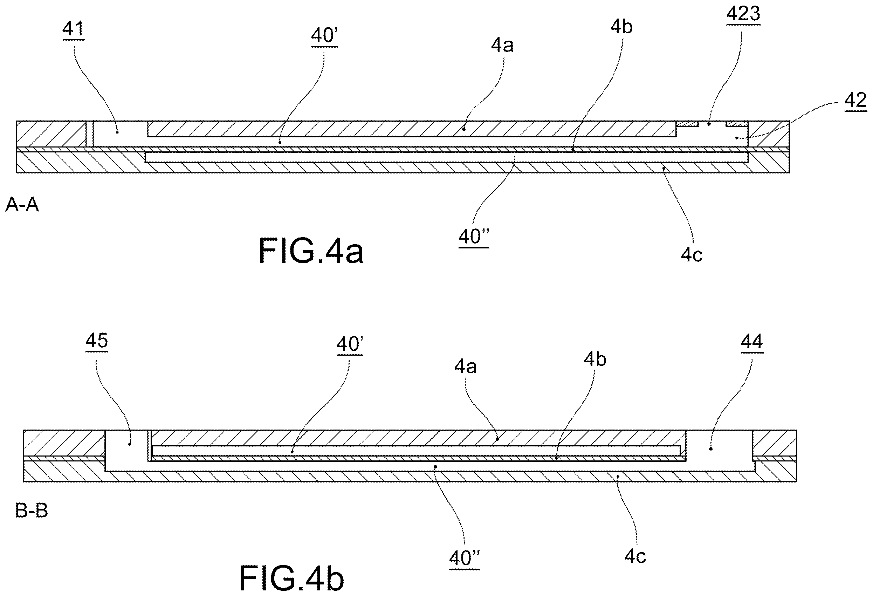

- figures 4a and 4b show a section of the base body, respectively, along the section plane A-A and the section plane B-B of figure 3b, respectively;

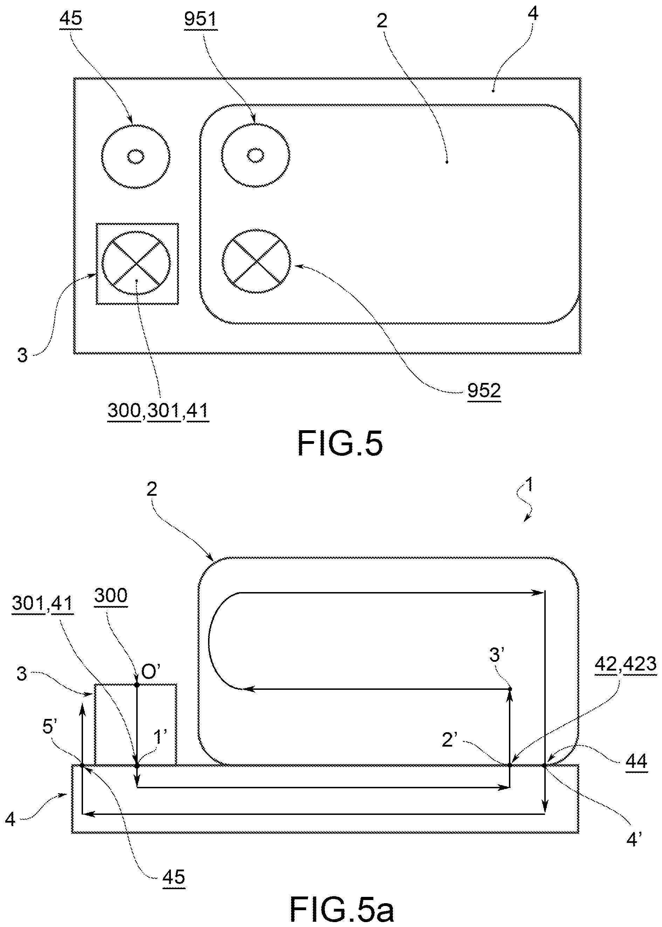

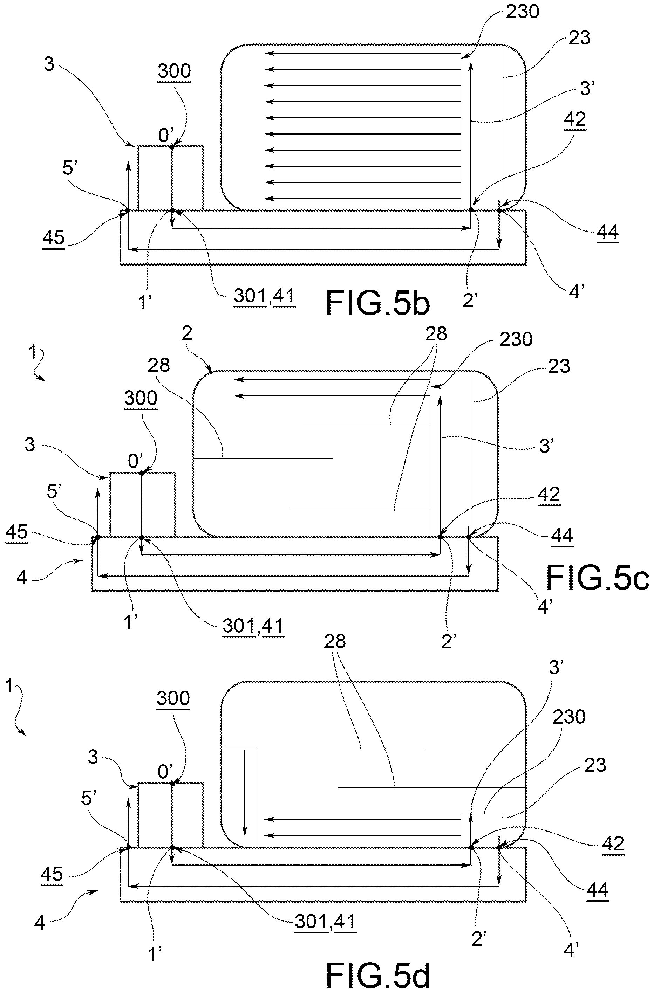

- figure 5 shows a diagrammatic top view of an evaporator assembly according to the present invention;
- figures 5a, 5b, 5c and 5d show some diagrammatic sectional views of the assembly of figure 5, in some embodiments;
- figure 6 shows by way of example a thermodynamic graph representative of the ideal cycle of the circulation circuit of a refrigerant fluid and of the state of the refrigerant fluid in the evaporator assembly, according to the present invention;
- figures 7a, 7b, 7c, 7d, 7e, 7f, 7g, 7h, 7i each show a diagrammatic top view of an evaporator assembly, according to the present invention, in accordance with a respective alternative embodiment;
- figure 8 shows a diagrammatic top view of an evaporator assembly, according to the present invention, in accordance with possible embodiments.

### Detailed description

With reference to the accompanying figures, numeral 1 indicates an evaporator assembly 1 in accordance with the present invention.

The evaporator assembly 1 is specific for the automotive field, thus having features, for example geometric, which make it suitable for being housable in a vehicle and to be operably connectable, as well as fluidly connectable, to other specific vehicle components.

In fact, the evaporator assembly 1 of the present invention is fluidly connectable to a refrigerant fluid circulation circuit and to a cooling circuit of an operating unit, preferably a battery pack, in which the cooling liquid comprised in a vehicle flows.

In other words, said refrigerant fluid and said cooling liquid flow in the evaporator assembly 1 of the present invention and the evaporator assembly 1 is suitable for performing heat exchange operations between the refrigerant fluid and the cooling liquid.

The primary function of the evaporator assembly 1 is to perform adequate cooling of the cooling liquid of the operating unit.

Another important function entrusted to the evaporator assembly 1 is to manage the refrigerant fluid and in particular the physical properties thereof to perform, by controlling the heat exchange, the cooling of the cooling liquid and therefore allow the management of any cooling of the operating unit.

According to the present invention, the evaporator assembly 1 comprises a main axis X-X and comprises a longitudinal axis Y-Y and a transverse axis Z-Z orthogonal to the main axis X-X. Preferably, the main axis X-X is the vertical axis, with respect to which the evaporator assembly 1 or the components thereof described below extends in height or vertically. Preferably, the longitudinal axis Y-Y and the transverse axis Z-Z are such as to lie on the same imaginary plane.

It is emphasized that in the present discussion, the use of the terms "upper" and "lower" refers specifically to the accompanying drawings, with reference to the main axis X-X, but does not in any way limit the use of the evaporator assembly 1 or the positioning thereof inside a vehicle.

In accordance with the present invention, the evaporator assembly 1 comprises a heat exchanger 2, in which the refrigerant fluid and the cooling liquid are suitable for flowing.

The heat exchanger 2 comprises, along said main axis X-X, a plurality of plates: preferably, an upper exchanger plate, a plurality of intermediate exchanger plates and a lower exchanger plate. In other words, said plates are mutually stacked along the main axis X-X.

In accordance with a preferred embodiment, the heat exchanger 2 comprises a plurality of exchanger plates superimposed along the main axis X-X to define a plurality of conduits through which the refrigerant fluid and the cooling liquid flow, respectively.

In accordance with a preferred embodiment, the heat exchanger 2 comprises a plurality of exchanger plates superimposed along the main axis X-X to define mutually alternating conduits through which the refrigerant fluid and the cooling liquid flow, respectively.

In accordance with a preferred embodiment, the upper exchanger plate and the lower exchanger plate are suitable for sandwiching the plurality of intermediate exchanger plates therebetween. In accordance with the present invention, the stacking of said plates defines a refrigerant fluid flowing zone and a cooling liquid flowing zone comprising a plurality of planar refrigerant fluid flowing regions, respectively, and a plurality of planar cooling liquid flowing regions, preferably alternating with one another along the main axis, and comprising vertical refrigerant inlet and outlet conduits and vertical liquid inlet and outlet conduits, respectively, fluidly connected to the respective planar flowing regions.

In accordance with a preferred embodiment, the refrigerant cooling fluid flowing zone comprises two vertical refrigerant conduits, for the inlet and outlet of the refrigerant fluid.

In accordance with a preferred embodiment, the cooling liquid flowing zone comprises two vertical liquid conduits, for the inlet and outlet of the cooling liquid.

In other words, the exchanger plates are specifically shaped so as to vertically align a plurality of specific through openings so as to identify the vertical conduits.

In still other words, the exchanger plates are specifically shaped to identify specific planar, i.e., longitudinal and/or transverse, passages therebetween.

In accordance with a preferred embodiment, the exchanger plates are shaped to define U-shaped circulation passages on the refrigerant fluid circuit and/or on the cooling liquid circuit.

In accordance with the present invention, the evaporator assembly 1 further comprises a lamination member 3, which is connectable to a conduit of the refrigerant fluid circulation circuit to receive the refrigerant fluid in the liquid state. In accordance with the present invention, hence, the lamination member 3 is suitable to generate a volumetric expansion of the refrigerant fluid, that is a decreasing of the pressure and of the temperature of the refrigerant fluid in inlet in the evaporator assembly 1.

Typically, the lamination member 3 receives refrigerant fluid in the liquid state coming from a condenser placed upstream with respect to the refrigerant fluid circulation direction. Eventually, following the sudden decrease in pressure, the transformation of a fraction of the refrigerant fluid from the liquid to the gaseous state may occur.

In accordance with a preferred embodiment, the lamination member 3 is an expansion valve 3A.

In accordance with other preferred embodiments, the lamination member 3 is a capillary or an orifice with a controlled section.

In accordance with a preferred embodiment, the expansion valve 3A is a thermostatic valve of the mechanical type comprising a calibrated opening. Preferably said calibrated opening is controlled by a mechanical actuator. Typically, said mechanical actuator is activated as a function of the temperature of the refrigerant fluid exiting the evaporator.

In accordance with a preferred embodiment, the expansion valve 3A is an electronic expansion valve comprising a calibrated opening. Preferably said calibrated opening is controlled by a shutter operatively connected to an electric (electric motor) or electromagnetic (solenoid) control actuator.

In accordance with this embodiment, the expansion valve 3A is an electronic expansion valve of the pulse type, analog, hot motor or stepper motor.

In accordance with a preferred embodiment, the expansion valve 3A is of the hybrid type comprising a mechanical actuator coupled to an electronic control device.

Furthermore, in accordance with the present invention, the evaporator assembly 1 of the present invention comprises a base body 4. The base body 4 is suitable for supporting the heat exchanger 2 and the lamination member 3. Furthermore, the base body 4 is suitable for fluidly connecting such components as described in detail below.

According to a preferred embodiment, the heat exchanger 2 is fluidly connected to the cooling circuit in an independent manner, comprising a specific cooling liquid inlet 951 and a specific cooling liquid outlet 952, preferably obtained in the upper exchanger plate.

In accordance with a preferred embodiment, the heat exchanger 2 is fluidly connected by the base body 4 to the refrigerant fluid circulation circuit, as widely described below.

In fact, the base body 4 has a substantially planar extension along the longitudinal axis Y-Y and the transverse axis Z-Z, comprising, along the main axis X-X, a first fluid region 40' and a second fluid region 40".

In accordance with the present invention, the base body 4 further comprises a body inlet mouth 41 which fluidly connects the lamination member 3 and the first fluid region 40', and a body outlet mouth 45 which is fluidly connected to the second fluid region 40'' and which is connectable to a conduit of the refrigerant fluid circulation circuit.

In addition, according to the present invention, the base body 4 comprises an exchanger inlet mouth 42 which fluidly connects the first fluid region 40' and the heat exchanger 2 and an exchanger outlet mouth 44 which fluidly connects the heat exchanger 2 and the second fluid region 40".

In accordance with a preferred embodiment, the base body 4 comprises an intermediate plate 4b separating the first fluid region 40' and the second fluid region 40".

Furthermore, according to a preferred embodiment, the base body 4 is a multi-plate component comprising along the axis X-X, an upper plate 4a, an intermediate plate 4b and a lower plate 4c.

Preferably, the upper plate 4a and the lower plate 4c are operatively connected around the perimeter, defining an operative fluid region 40 comprising the first fluid region 40' and the second fluid region 40''.

According to a preferred embodiment, the intermediate plate 4b is thus sandwiched between the upper plate 4a and the lower plate 4c.

According to an alternative embodiment, the intermediate plate 4b is integrated in the upper plate 4a or in the lower plate 4c separating the first fluid region 40' from the second fluid region 40".

According to a preferred embodiment, the base body 4 is a multi-plate component comprising along the axis X-X, a plurality of plates shaped so that the first fluid region 40' comprises a plurality of passages or chambers and the second fluid region 40'' comprises a plurality of passages or chambers.

Basically, according to this preferred embodiment, the base body 4 comprises a plurality of intermediate plates positioned between the upper plate 4a and the lower plate 4c, suitable for dividing the first fluid region 40' and the second fluid region 40'' into a plurality of passages or circulation chambers.

According to a preferred embodiment, the mouths comprised in the base body 4 are positioned so that the refrigerant fluid is suitable for flowing in the first fluid region 40' in a first flow direction and in the second fluid region 40'' in a second flow direction.

Preferably, the first flow direction and the second flow direction are mutually opposite so that the refrigerant fluid flows in counter-flow.

In accordance with a preferred embodiment, the first fluid region 40' is positioned with respect to the main axis X-X close to the heat exchanger 2 and the second fluid region 40'' is positioned distal from the heat exchanger 2.

In other words, the first fluid region 40' is positioned above, while the second fluid region 40'' is positioned below.

Preferably, the arrangement and positioning of the first fluid region 40' and of the second fluid region 40'', are such that the refrigerant fluid flowing from the body inlet mouth 41 to the exchanger inlet mouth 42 is subjected to a heat exchange with the refrigerant fluid exiting from the exchanger and circulating in the second fluid region 40'' (at a lower temperature - as illustrated below). Said heat exchange may determine the formation of a further liquid fraction, through condensation, in the portion of refrigerant fluid circulating in the first fluid region 40'.

Preferably, the arrangement and positioning of the first fluid region 40' and of the second fluid region 40'', are such that the refrigerant fluid flowing from the exchanger outlet mouth 44 to the body outlet mouth 45 is subjected to an increase in temperature by heat exchange. Said heat exchange involves the fact that the refrigerant fluid flows through the body outlet mouth 45 in the form of overheated steam.

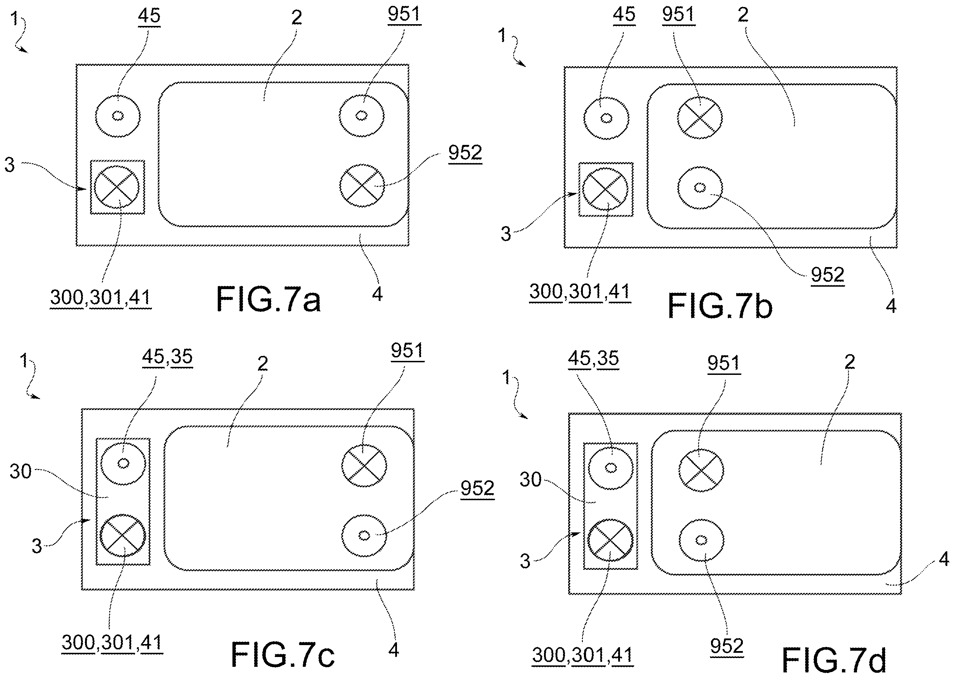

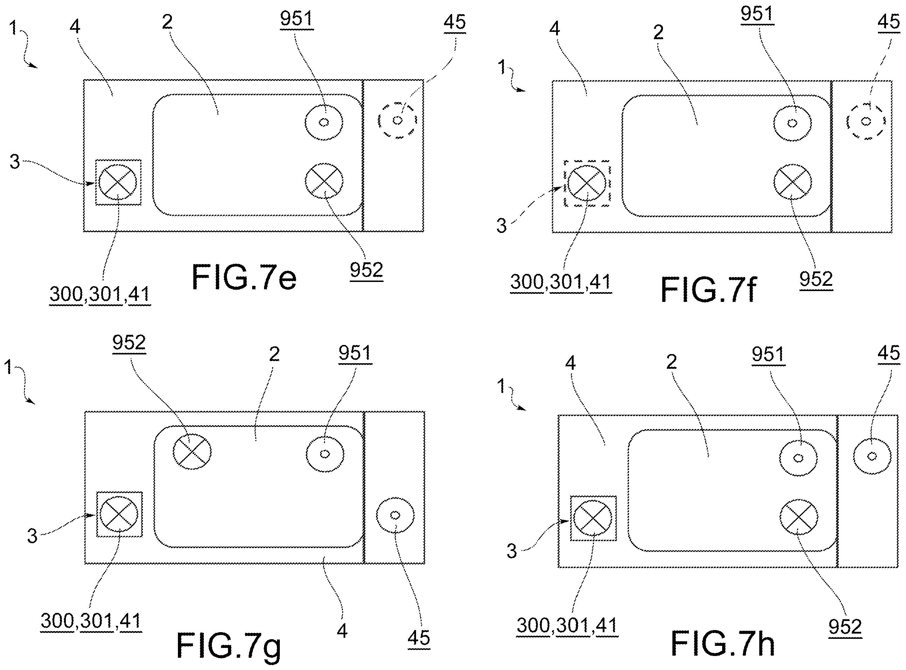

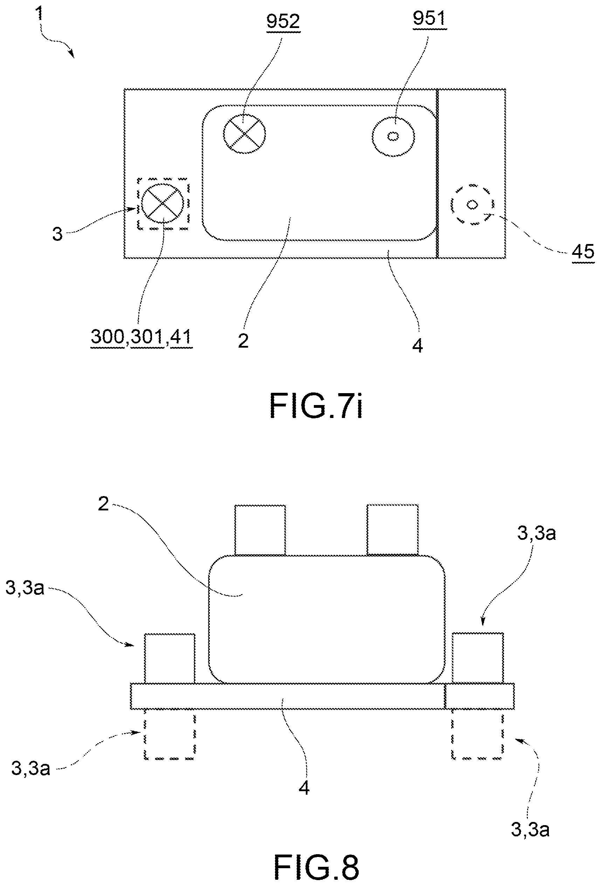

As shown by way of example in the figures, in particular in figures 7a, 7b, 7c, 7d, 7e, 7f, 7g, 7h, 7i, a plurality of embodiments is provided, as a function of the positioning of the mouths.

Preferably, the lamination member 3 is positioned extending parallel to the heat exchanger 2. In accordance with what is shown in figure 8, there are embodiments in which the lamination member 3 is positioned on an opposite side with respect to the side on which the heat exchanger 2 is positioned.

In accordance with a preferred embodiment, the body inlet mouth 41 and the body outlet mouth 45 are positioned close to each other, while the exchanger inlet mouth 42 and the exchanger outlet mouth 44 are positioned close to each other, longitudinally and/or transversely spaced from the body inlet mouth 41 and a body outlet mouth 45.

According to a preferred embodiment, the exchanger inlet mouth 42 comprises a second lamination member 423 suitable for leading to a further volumetric expansion of the refrigerant fluid.

According to a preferred embodiment, said second lamination member 423 comprises a calibrated exchanger opening 423' suitable for leading to a further volumetric expansion of the refrigerant fluid.

In accordance with a preferred embodiment, the second lamination member 423 is installed inside the heat exchanger 2.

In accordance with this embodiment, the heat exchanger 2 comprises an inlet conduit 23 fluidly connected to the exchanger inlet mouth 42, in which said inlet conduit comprises at least one calibrated conduit opening 230 suitable for leading to a further volumetric expansion of the refrigerant fluid.

Preferably, said inlet conduit 23 extends for an axial section, parallel to the axis X-X, inside the heat exchanger 2. Preferably, said calibrated conduit opening 230 is positioned at the axial top of the inlet conduit.

Preferably, said inlet conduit 23 extends for an axial length along substantially the entire height of the heat exchanger 2. Preferably, the inlet conduit 23 comprises a plurality of axially spaced calibrated conduit openings 230. Preferably, said calibrated conduit openings 230 are equidistant.

Preferably, the inlet conduit 23 comprises a plurality of calibrated conduit openings 230, axially spaced, having a variable diameter along the conduit axis.

In still other words, the inlet conduit 23 is housed in the vertical refrigerant inlet conduit.

In accordance with a preferred embodiment, the heat exchanger 2 comprises one or more horizontal partitions 28 orthogonal to the main axis X-X suitable for identifying a winding path for the refrigerant fluid.

In accordance with a preferred embodiment, said horizontal partitions 28 and/or horizontal partitions 28 close the vertical conduits, preferably the vertical refrigerant conduits, to force the working fluid to follow a winding path inside the exchanger.

According to a preferred embodiment, the fluid mouths of the base body 4 are positioned on the same side, so that the heat exchanger 2 and the lamination member 3 extend parallel to each other and parallel to the main axis X-X.

According to a preferred embodiment, the fluid mouths of the base body 4 are positioned on the same side, so that the heat exchanger 2 and the lamination member 3, in particular, the expansion valve 3A, extend parallel to each other and parallel to the main axis X-X.

In accordance with a preferred embodiment, the lamination member 3 comprises a member body 30 engaged with the base body 4.

Preferably, the member body 30 is fixed to the base body 4 by a removable connection or by a non-removable connection.

Preferably, the member body 30 is fluidly connected to the circulation circuit of a cooling fluid. In particular, the member body 30 is fluidly connected to the body inlet mouth 41.

In further detail, according to a preferred embodiment, the member body 30 comprises a member inlet mouth 300 and a member outlet mouth 301 through which the cooling fluid flows in and out of the member body 30. The member outlet mouth 301 engages the base body 4 and is fluidly connected to the body inlet mouth 41.

According to a preferred embodiment, the member body 30 is also fluidly connected to the body outlet mouth 45. In fact, the member body 30 also comprises an auxiliary outlet mouth 35 from which the exiting refrigerant fluid flows.

In accordance with a preferred embodiment, the plate-like elements of the heat exchanger 2 and/or the plate-like elements of the base body 4 are mutually integrally combinable by means of a brazing operation, preferably in autoclave.

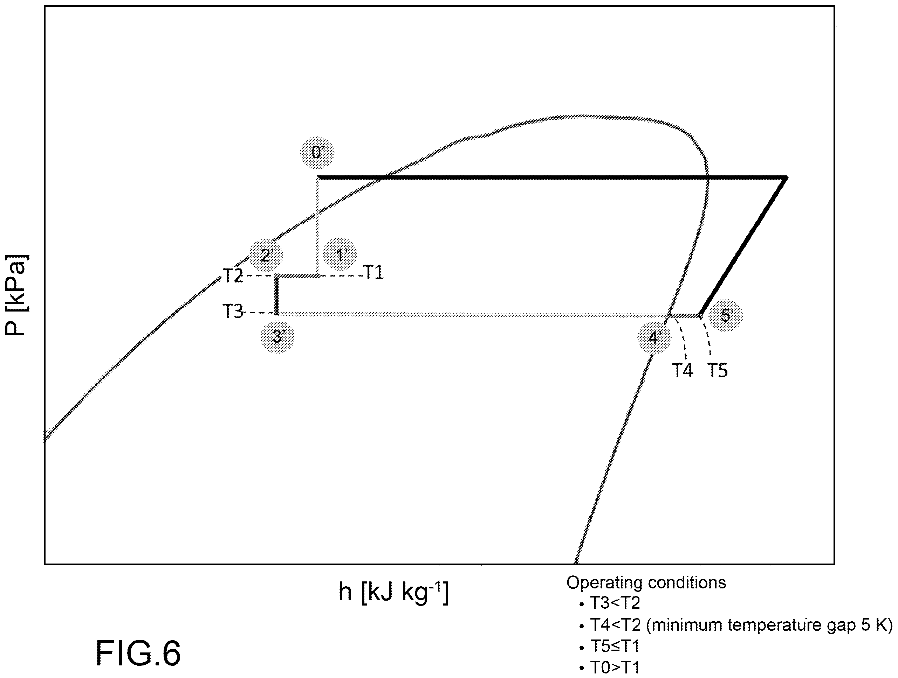

With specific reference to the evaporator assembly of the present invention, it is emphasized that the graph of figure 6 shows an example of a Mollier diagram, i.e., the diagram of the liquid-steam mixture of the refrigerant fluid flowing in the evaporator assembly in accordance with the present invention. The graph shown is provided purely by way of example and does not consider the chemical nature of the refrigerant fluid and the specific operating conditions of the circuit on which the assembly is installed.

In particular, such a diagram shows the enthalpy in kJ/kg on the abscissa axis and the pressure value in Pascal on the ordinate axis, while the curve illustrates the zone of the biphasic mixtures.

In still other words, the graph of figure 6 depicts the ideal refrigeration cycle of the refrigerant fluid flowing in the evaporator assembly 1.

The point 0' on the graph depicts the entry of the refrigerant fluid into the lamination member 3

Point 1' on the graph depicts the body inlet mouth 41.

Point 2' on the graph depicts the exchanger inlet mouth 42.

Point 3' on the graph depicts the fluid passage point in a region corresponding to the exchanger inlet mouth 42, in particular corresponding to the calibrated exchanger opening 423' and/or to the calibrated conduit opening 230.

Point 4' on the graph depicts the exchanger outlet mouth 44.

Point 5' on the graph depicts the body outlet mouth 45.

Therefore, in accordance with the above, in the section 0'-1' the pressure variation of the refrigerant fluid obtained by the lamination member 3 is depicted. In conjunction with the pressure variation, in particular the pressure decrease, the refrigerant fluid undergoes a phase transition from the liquid to the gaseous state at least for a certain fraction.

The section 1'-2' depicts the refrigerant fluid flow between the body inlet mouth 41 and the exchanger inlet mouth 42, in the first fluid region 40'. In such a section, the proximity between the first fluid region 40' and the second fluid region 40'', leads to a variation in the temperature of the refrigerant fluid flowing in the second fluid region 40'' while maintaining the pressure value substantially unchanged (considering an ideal cycle without pressure drops and load losses). In other words, in the section 1'-2' there is an increase in the quantity of liquid phase of the refrigerant fluid circulating in the first fluid region 40'.

The section 2'-3' depicts the refrigerant fluid flow through the exchanger inlet mouth 42, and when provided, through the second lamination member (the calibrated opening 423' and/or the calibrated conduit opening 230). In such a passage, the refrigerant fluid undergoes a further volumetric variation, and a further lowering of the pressure, as well as a further variation of the temperature, in particular a temperature lowering.

The section 3'-4' depicts the refrigerant fluid flow in the heat exchanger 2, in particular, from the exchanger inlet mouth 42, and when provided, through the calibrated opening 423' and/or the calibrated conduit opening 230, to the exchanger outlet mouth 44. In this section, the refrigerant liquid undergoes a state change passing from the mixed liquid-steam phase to the steam phase. This state change is determined by the heat exchange of the refrigerant fluid with the cooling liquid; in fact, the latter benefits from this exchange by cooling itself, transferring heat to the refrigerant fluid which undergoes a transition towards the gaseous state.

The section 4'-5' depicts the refrigerant fluid flow between the exchanger outlet mouth 44 and the body outlet mouth 45, in the second fluid region 40''. In such a section, the proximity between the first fluid region 40' and the second fluid region 40'', leads to a variation in the temperature of the refrigerant fluid while maintaining the pressure value substantially unchanged (considering an ideal cycle without pressure drops and load losses). In other words, following the heat exchange of the refrigerant fluid circulating in the second fluid region 40'', at a lower temperature than the temperature of the refrigerant fluid circulating in the first fluid region 40', the gaseous refrigerant fluid increases the temperature thereof.

Advantageously, by virtue of this further increase in temperature, the refrigerant fluid exits the evaporator assembly 1 in the form of overheated steam. Advantageously, the possibility that any portions of liquid phase are present in the refrigerant fluid stream exiting the evaporator assembly is minimized, preserving the compressor located downstream of the evaporator assembly, which is very sensitive to the presence of a liquid phase dispersed in the refrigerant fluid.

Innovatively, the evaporator assembly of the present invention amply fulfills the object of the present invention, overcoming problems which are typical of the prior art.

Advantageously, in fact, the evaporator assembly comprises a base body with fluid flow regions positioned respectively upstream and downstream of the exchanger, coupled in mutual heat exchange to allow a more precise and efficient regulation of the state of the refrigerant fluid.

Advantageously, the management of the heat exchange inside the base body allows the overheating heat to be supplied at the outlet of the evaporator assembly to ensure the complete passage of the refrigerant fluid to the gaseous state.

Advantageously, the enthalpy jump associated with the refrigeration cycle completed by the evaporator assembly, performed by the heat exchanger of the present invention is greater than the one present in the solutions of the state of the art.

Advantageously, the greater enthalpy difference offered by the evaporator assembly is obtained by means of a series of successive volumetric expansions imposed on the refrigerant fluid and by the heat exchange performed between the refrigerant fluid entering the exchanger and the refrigerant fluid exiting the exchanger.

Advantageously, the greater enthalpy difference offered by the evaporator assembly is obtained by a series of successive volumetric expansions imposed on the refrigerant fluid and by the heat exchange performed between the refrigerant fluid entering the exchanger and the refrigerant fluid exiting the exchanger, in which the heat exchange is performed in a circuit section interposed between two points in which the entering circulating refrigerant fluid undergoes a volumetric expansion, in which both of said points are integrated on the evaporator assembly.

Advantageously, the base body comprises fluid flow regions coupled in mutual heat exchange, allowing this component to be exploited to obtain a refrigerant fluid exiting the assembly in the form of overheated steam, thus maximizing the exploitation of the inner channels of the exchanger for heat exchange with the cooling liquid.

Advantageously, the evaporator assembly is capable of managing higher thermal powers by virtue of the greater enthalpy difference compared to the known evaporators affected by the same refrigerant fluid flow rate.

Advantageously, the base body allows to maximize the heat exchange between the refrigerant fluid entering and the refrigerant fluid exiting by means of respective fluid regions extending for the entire width of the base body, making full use of the available spaces and increasing the exchange surface.

Advantageously, the base body is a multifunctional component which performs the function of supporting the lamination member and overheating the cooling fluid, simplifying the structure of the heat exchanger.

Advantageously, the base body is a multifunctional component which performs the function of supporting the lamination member, facilitating the assembly operations of the evaporator assembly which thus results in a compact device.

Advantageously, the base body is a multifunctional component which integrates inside itself the circulation conduits suitable for putting the lamination member and the exchanger in fluid communication, adequately managing the available spaces to maximize the exchange surfaces and therefore the efficiency of the evaporator device.

Advantageously, the base body is a multifunctional component which integrates therein the circulation conduits designed to put the lamination member and the exchanger in fluid communication, adequately managing the available space, for example allowing the positioning of the lamination member in an eccentric position with respect to the exchanger.

Advantageously, the base body performs the function of supporting the lamination member, simplifying any maintenance - replacement operation of the lamination member itself or of the evaporator assembly.

Advantageously, the evaporator assembly allows to exploit the overall dimensions available on the vehicle, as it can be installed on both electric vehicles and hybrid-powered vehicles.

Advantageously, the evaporator assembly allows the performance of an efficient management of the temperature of the battery pack.

Advantageously, the evaporator assembly improves the efficiency of both the circulation circuit of a refrigerant fluid and of the cooling liquid circuit.

It is apparent that, in order to meet contingent needs, a person skilled in the art may make changes to the above-described evaporator assembly, all contained within the scope of protection as defined by the following claims.

### Reference number list:

1 evaporator assembly
2 heat exchanger
23 inlet conduit
230 calibrated conduit opening
28 horizontal partitions
3 lamination member
3A expansion valve
30 member body
300 member inlet mouth
301 member outlet mouth
35 auxiliary outlet mouth
4 base body
40' first fluid region
40'' second fluid region
4a upper plate
4b intermediate plate
4c lower plate
41 body inlet mouth
42 exchanger inlet mouth
423 second lamination member
423' calibrated opening
44 exchanger outlet mouth
45 body outlet mouth
951 cooling liquid inlet
952 cooling liquid outlet
X-X main axis
Y-Y longitudinal axis
Z-Z transverse axis
0', 1', 2', 3', 4', 5' points on the graph of Fig. 6

## Claims

1. An evaporator assembly (1) fluidically connectable to a refrigerant fluid circulation circuit and to a cooling circuit of an operating unit, preferably a battery pack, in which a cooling liquid included in a vehicle flows, wherein the evaporator assembly (1) is suitable for performing heat exchange operations between the refrigerant fluid and the cooling liquid, wherein the evaporator assembly (1) is suitable for managing the physical properties, in particular the temperature, of the refrigerant fluid, wherein the evaporator assembly (1) comprises a main axis (X-X), and a longitudinal axis (Y-Y) and a transverse axis (Z-Z) orthogonal to the main axis (X-X), and comprises:
i) a heat exchanger (2), in which the refrigerant fluid and the cooling liquid are suitable for flowing;
ii) a lamination member (3) connectable to a conduit of the refrigerant fluid circulation circuit to receive the refrigerant fluid in the liquid state;
wherein the evaporator assembly (1) is **characterized by** the fact that it also comprises:
iii) a base body (4), having a substantially planar extension along the longitudinal axis (Y-Y) and the transverse axis (Z-Z) comprising, along the main axis (X-X), a first fluid region (40') and a second fluid region (40"), wherein the heat exchanger (2) and the lamination member (3) are fluidly connected to the base body (4), wherein the base body (4) comprises:
- a body inlet mouth (41) fluidly connecting the lamination member (3) and the first fluid region (40');
- an exchanger inlet mouth (42) fluidly connecting the first fluid region (40') and the heat exchanger (2);
- an exchanger outlet mouth (44) fluidly connecting the heat exchanger (2) and the second fluid region (40");
- a body outlet mouth (45) fluidly connected to the second fluid region (40") and connectable to a conduit of the refrigerant fluid circulation circuit.

2. Evaporator assembly (1) according to claim 1, wherein the base body (4) comprises an intermediate plate (4b) separating the first fluid region (40') and the second fluid region (40").

3. Evaporator assembly (1) according to claim 1 or claim 2, wherein the base body (4) is a multi-plate component comprising, along the main axis (X-X), an upper plate (4a), an intermediate plate (4b) and a lower plate (4c), wherein the upper plate (4a) and the lower plate (4c) are operatively peripherally connected defining an operating fluid region (40) comprising the first fluid region (40') and the second fluid region (40").

4. Evaporator assembly (1) according to any one of the preceding claims, wherein the mouths included in the base body (4) are positioned so that the refrigerant fluid is suitable for flowing in the first fluid region (40') in a first flow direction and in the second fluid region (40") in a second flow direction, wherein the first flow direction and the second flow direction are opposite to each other so that the refrigerant fluid flows in counter-flow.

5. Evaporator assembly (1) according to any one of the preceding claims, wherein the first fluid region (40') and the second fluid region (40") are mutually positioned so that the refrigerant fluid flowing from the exchanger outlet mouth (44) to the body outlet mouth (45) in the second fluid region (40") increases in temperature and the refrigerant fluid flows through the body outlet mouth (45) in the form of superheated steam.

6. Evaporator assembly (1) according to any one of the preceding claims, wherein the first fluid region (40') and the second fluid region (40") are mutually positioned so that, in the refrigerant fluid flowing from the body inlet mouth (41) to the exchanger inlet mouth (42), a liquid fraction is formed by condensation.

7. Evaporator assembly (1) according to any one of the preceding claims, wherein the body inlet mouth (41) and the body outlet mouth (45) are positioned close to each other, while the exchanger inlet mouth (42) and the exchanger outlet mouth (44) are positioned close to each other, longitudinally and/or transversely spaced apart from the body inlet mouth (41) and the body outlet mouth (45) .

8. Evaporator assembly (1) according to any one of the preceding claims, wherein the exchanger inlet mouth (42) comprises a second lamination member (423), preferably a calibrated exchanger opening (423') suitable for leading to a further volumetric expansion of the refrigerant fluid.

9. Evaporator assembly (1) according to any one of claims 1 to 7, wherein the heat exchanger (2) comprises an inlet conduit (23) fluidly connected to the exchanger inlet mouth (42), wherein said inlet conduit (23) comprises at least one calibrated conduit opening (230) suitable for leading to a further volumetric expansion of the refrigerant fluid.

10. Evaporator assembly (1) according to any one of the preceding claims, wherein the heat exchanger (2) comprises one or more horizontal partitions (28) orthogonal to the main axis (X-X) suitable for identifying a winding path for the refrigerant fluid.

11. Evaporator assembly (1) according to any one of the preceding claims, wherein the fluid mouths of the base body (4) are positioned on the same side, so that the heat exchanger (2) and the lamination member (3) extend parallel to each other and parallel to the main axis (X-X).

12. Evaporator assembly (1) according to any one of the preceding claims, wherein the lamination member (3) comprises an expansion valve (3A) comprising a calibrated opening, being of the mechanically-controlled type or of the electronically-controlled type.

13. Evaporator assembly (1) according to any one of the preceding claims, wherein the lamination member (3), preferably of the expansion valve type (3A), comprises a member body (30) engaged with the base body (4), wherein the member body (30) is fluidly connectable to the refrigerant fluid circulation circuit and is fluidly connected to the body inlet mouth (41) and the body outlet mouth (45).

14. Evaporator assembly (1) according to any one of the preceding claims, wherein the heat exchanger (2) comprises a plurality of exchanger plates superimposed along the main axis (X-X) to define mutually alternating conduits through which the refrigerant fluid and the cooling liquid flow, respectively.

15. Evaporator assembly (1) according to any one of the preceding claims, wherein the elements of the heat exchanger (2) and/or the elements of the base body (4) are mutually integrally joinable by means of a brazing operation, preferably in autoclave.

## Patentansprüche

1. Verdampferanordnung (1), die fluidisch mit einem Kältemittelfluidzirkulationskreislauf und einem Kühlkreislauf einer Betriebseinheit, vorzugsweise einem Batteriepack bzw. Akkusatz, verbindbar ist, in dem eine in einem Fahrzeug enthaltene Kühlflüssigkeit fließt, wobei die Verdampferanordnung (1) zum Durchführen von Wärmeaustauschvorgängen zwischen dem Kältemittelfluid und der Kühlflüssigkeit geeignet ist, wobei die Verdampferanordnung (1) zum Verwalten der physikalischen Eigenschaften, insbesondere der Temperatur, des Kältemittelfluids geeignet ist, wobei die Verdampferanordnung (1) eine Hauptachse (X-X) sowie eine Längsachse (Y-Y) und eine Querachse (Z-Z) orthogonal zu der Hauptachse (X-X) umfasst, und umfasst:
i) einen Wärmetauscher (2), in dem das Kältemittelfluid und die Kühlflüssigkeit zum Fließen geeignet sind;
ii) ein Laminierungsglied (3), das mit einer Leitung des Kältemittelfluidzirkulationskreislaufs verbindbar ist, um das Kältemittelfluid im flüssigen Zustand aufzunehmen;
wobei die Verdampferanordnung (1) **dadurch gekennzeichnet ist, dass** sie zudem umfasst:
iii) einen Basiskörper (4) mit einer im Wesentlichen planaren Erstreckung bzw. Ausdehnung entlang der Längsachse (Y-Y) und der Querachse (Z-Z), der entlang der Hauptachse (X-X) einen ersten Fluidbereich (40') und einen zweiten Fluidbereich (40") umfasst, wobei der Wärmetauscher (2) und das Laminierungsglied (3) fluidisch mit dem Basiskörper (4) verbunden sind, wobei der Basiskörper (4) umfasst:
- eine Körpereinlassöffnung (41), die das Laminierungsglied (3) und den ersten Fluidbereich (40') fluidisch verbindet;
- eine Tauschereinlassöffnung (42), die den ersten Fluidbereich (40') und den Wärmetauscher (2) fluidisch verbindet;
- eine Tauscherauslassöffnung (44), die den Wärmetauscher (2) und den zweiten Fluidbereich (40") fluidisch verbindet;
- eine Körperauslassöffnung (45), die fluidisch mit dem zweiten Fluidbereich (40") verbunden ist und mit einer Leitung des Kältemittelfluidzirkulationskreislaufs verbindbar ist.

2. Verdampferanordnung (1) nach Anspruch 1, wobei der Basiskörper (4) eine Zwischenplatte (4b) umfasst, die den ersten Fluidbereich (40') und den zweiten Fluidbereich (40") trennt.

3. Verdampferanordnung (1) nach Anspruch 1 oder Anspruch 2, wobei der Basiskörper (4) eine Mehrplattenkomponente ist, die entlang der Hauptachse (X-X) eine obere Platte (4a), eine Zwischenplatte (4b) und eine untere Platte (4c) umfasst, wobei die obere Platte (4a) und die untere Platte (4c) operativ peripher bzw. umfangsmäßig verbunden sind und einen Betriebsfluidbereich (40) definieren, der den ersten Fluidbereich (40') und den zweiten Fluidbereich (40") umfasst.

4. Verdampferanordnung (1) nach einem der vorhergehenden Ansprüche, wobei die in dem Basiskörper (4) enthaltenen Öffnungen so positioniert sind, dass das Kältemittelfluid geeignet ist, in dem ersten Fluidbereich (40') in einer ersten Flussrichtung und in dem zweiten Fluidbereich (40") in einer zweiten Flussrichtung zu fließen, wobei die erste Flussrichtung und die zweite Flussrichtung einander entgegengesetzt sind, so dass das Kältemittelfluid im Gegenstrom fließt.

5. Verdampferanordnung (1) nach einem der vorhergehenden Ansprüche, wobei der erste Fluidbereich (40') und der zweite Fluidbereich (40") so zueinander positioniert sind, dass die Temperatur des von der Tauscherauslassöffnung (44) zu der Körperauslassöffnung (45) in dem zweiten Fluidbereich (40") fließende Kältemittelfluid zunimmt und das Kältemittelfluid in der Form von überhitztem Dampf durch die Körperauslassöffnung (45) fließt.

6. Verdampferanordnung (1) nach einem der vorhergehenden Ansprüche, wobei der erste Fluidbereich (40') und der zweite Fluidbereich (40") so zueinander positioniert sind, dass in dem von der Körpereinlassöffnung (41) zu der Tauschereinlassöffnung (42) fließenden Kältemittelfluid ein Flüssigkeitsanteil durch Kondensation gebildet wird.

7. Verdampferanordnung (1) nach einem der vorhergehenden Ansprüche, wobei die Körpereinlassöffnung (41) und die Körperauslassöffnung (45) nahe beieinander positioniert sind, während die Tauschereinlassöffnung (42) und die Tauscherauslassöffnung (44) nahe beieinander positioniert sind, wobei sie längs und/oder quer von der Körpereinlassöffnung (41) und der Körperauslassöffnung (45) beabstandet sind.

8. Verdampferanordnung (1) nach einem der vorhergehenden Ansprüche, wobei die Tauschereinlassöffnung (42) ein zweites Laminierungsglied (423) umfasst, vorzugsweise eine kalibrierte Tauscheröffnung (423'), die geeignet ist, zu einer weiteren volumetrischen Ausdehnung des Kältemittelfluids zu führen.

9. Verdampferanordnung (1) nach einem der Ansprüche 1 bis 7, wobei der Wärmetauscher (2) eine Einlassleitung (23) umfasst, die fluidisch mit der Tauschereinlassöffnung (42) verbunden ist, wobei die Einlassleitung (23) mindestens eine kalibrierte Leitungsöffnung (230) umfasst, die geeignet ist, zu einer weiteren volumetrischen Ausdehnung des Kältemittelfluids zu führen.

10. Verdampferanordnung (1) nach einem der vorhergehenden Ansprüche, wobei der Wärmetauscher (2) eine oder mehrere horizontale Trennungen bzw. Trennwände (28) orthogonal zu der Hauptachse (X-X) umfasst, die geeignet sind, einen gewundenen Weg für das Kältemittelfluid zu identifizieren.

11. Verdampferanordnung (1) nach einem der vorhergehenden Ansprüche, wobei die Fluidöffnungen des Basiskörpers (4) auf derselben Seite positioniert sind, so dass sich der Wärmetauscher (2) und das Laminierungsglied (3) parallel zueinander und parallel zu der Hauptachse (X-X) erstrecken.

12. Verdampferanordnung (1) nach einem der vorhergehenden Ansprüche, wobei das Laminierungsglied (3) ein Expansionsventil (3A) mit einer kalibrierten Öffnung umfasst, das vom mechanisch gesteuerten bzw. geregelten Typ oder vom elektronisch gesteuerten bzw. geregelten Typ ist.

13. Verdampferanordnung (1) nach einem der vorhergehenden Ansprüche, wobei das Laminierungsglied (3), vorzugsweise vom Expansionsventiltyp (3A), einen Gliedkörper (30) umfasst, der mit dem Basiskörper (4) in Eingriff ist, wobei der Gliedkörper (30) fluidisch mit dem Kältemittelfluidzirkulationskreislauf verbindbar ist und fluidisch mit der Körpereinlassöffnung (41) und der Körperauslassöffnung (45) verbunden ist.

14. Verdampferanordnung (1) nach einem der vorhergehenden Ansprüche, wobei der Wärmetauscher (2) eine Mehrzahl von Tauscherplatten umfasst, die entlang der Hauptachse (X-X) überlagert bzw. übereinander angeordnet sind, um jeweils abwechselnde Leitungen zu definieren, durch die das Kältemittelfluid bzw. die Kühlflüssigkeit fließen.

15. Verdampferanordnung (1) nach einem der vorhergehenden Ansprüche, wobei die Elemente des Wärmetauschers (2) und/oder die Elemente des Basiskörpers (4) mittels eines Lötvorgangs, vorzugsweise im Autoklaven, integral miteinander verbindbar sind.

## Revendications

1. Ensemble évaporateur (1) pouvant être relié de façon fluidique à un circuit de circulation de fluide réfrigérant et à un circuit d'une unité de commande, de préférence un bloc-batterie, à l'intérieur duquel coule un fluide réfrigérant contenu dans un véhicule, dans lequel l'ensemble évaporateur (1) est adapté pour effectuer des opérations d'échange de chaleur entre le fluide réfrigérant et le liquide de réfrigération, dans lequel l'ensemble évaporateur (1) est adapté pour gérer les caractéristiques physiques, notamment la température, du fluide réfrigérant, dans lequel l'ensemble évaporateur (1) comprend un axe principal (X-X) et un axe longitudinal (Y-Y) et un axe transversal (Z-Z) perpendiculaire à l'axe principal (X-X), et comprend :
i) un échangeur de chaleur (2) dans lequel le fluide réfrigérant et le liquide de réfrigération sont adaptés pour couler ;
ii) un élément de laminage (3) pouvant être connecté à un conduit du circuit de circulation de fluide réfrigérant pour recevoir le fluide réfrigérant en l'état liquide ;
dans lequel l'ensemble évaporateur (1) est **caractérisé en ce qu'**il comprend en outre :
iii) un corps de base (4) ayant une étendue sensiblement planaire le long de l'axe longitudinal (Y-Y) et l'axe transversal (Z-Z) comprenant, le long de l'axe principal (X-X), une première zone de fluide (40') et une deuxième zone de fluide (40"), dans lequel l'échangeur de chaleur (2) et l'élément de laminage (3) sont reliés de façon fluidique au corps de base (4), dans lequel le corps de base comprend :
- une bouche d'entrée de corps (41) reliant de façon fluidique l'élément de laminage (3) et la première zone de fluide (40') ;
- une bouche d'entrée échangeur (42) reliant de façon fluidique la première zone de fluide (40') et l'échangeur de chaleur (2) ;
- une bouche de sortie d'échangeur (44) reliant de façon fluidique l'échangeur de chaleur (2) et la deuxième zone de fluide (40") ;
- une bouche de sortie de corps (45) reliée de façon fluidique à la deuxième zone de fluide (40") et pouvant être reliée à un conduit du circuit de circulation de fluide réfrigérant.

2. Ensemble évaporateur (1) selon la revendication 1, dans lequel le corps de base (4) comprend une plaque intermédiaire (4b) séparant la première zone de fluide (40') et la deuxième zone de fluide (40").

3. Ensemble évaporateur (1) selon la revendication 1 ou la revendication 2, dans lequel le corps de base (4) est un composant multi-plaque comprenant, dans l'axe principal (X-X), une plaque supérieure (4a), une plaque intermédiaire (4b) et une plaque inférieure (4c), la plaque supérieure (4a) et la plaque inférieure (4c) étant fonctionnellement réunies à la périphérie, définissant une zone de fluide de fonctionnement (40) comportant la première zone de fluide (40') et la deuxième zone de fluide (40").

4. Ensemble évaporateur (1) selon l'une des revendications précédentes, dans lequel les bouches inclues dans le corps de base (4) sont positionnées de façon que le fluide réfrigérant est en mesure de couler dans la première zone de fluide (40') dans une première direction de flux et dans la deuxième zone de fluide (40") dans une deuxième direction de flux, dans lequel la première direction de flux et la deuxième direction de flux sont opposées l'une à l'autre, si bien que le fluide réfrigérant coule en contre-courant.

5. Ensemble évaporateur (1) selon l'une des revendications précédentes, dans lequel la première zone de fluide (40') et la deuxième zone de fluide (40") sont positionnées l'une par rapport à l'autre de façon que le fluide réfrigérant coulant de la bouche de sortie (44) de l'échangeur vers la bouche de sortie (45) du corps dans la deuxième zone de fluide (40") augmente en température et le fluide réfrigérant coule à travers la bouche de sortie (45) sous la forme de vapeur surchauffée.

6. Ensemble évaporateur (1) selon l'une des revendications précédentes, dans lequel la première zone de fluide (40') et la deuxième zone de fluide (40") sont disposées l'une par rapport à l'autre de façon que, dans le fluide réfrigérant coulant de la bouche d'entrée (41) de corps à la bouche d'entrée échangeur (42), une partie du liquide est formée par condensation.

7. Ensemble évaporateur (1) selon l'une des revendications précédentes, dans lequel la bouche d'entrée de corps (41) et la bouche de sortie de corps (45) sont positionnées proches l'une de l'autre, pendant que la bouche d'entrée d'échangeur (42) et la bouche de sortie d'échangeur (44) sont positionnées proches l'une de l'autre, longitudinalement et/ou transversalement espacées à part de la bouche d'entrée de corps (41) et la bouche de sortie de corps (45).

8. Ensemble évaporateur (1) selon l'une des revendications précédentes, dans lequel la bouche d'entrée d'échangeur (42) comprend un deuxième élément de laminage (423), de préférence une ouverture d'échangeur (423') calibrée, adaptée pour amener vers une autre expansion volumétrique du fluide réfrigérant.

9. Ensemble évaporateur (1) selon l'une des revendications 1 à 7, dans lequel l'échangeur de chaleur (2) comprend un conduit d'entrée (23) fluidiquement relié à la bouche d'entrée d'échangeur (42), dans lequel ledit conduit d'entrée (23) comprend au moins une ouverture de conduit calibrée (230) adaptée pour conduire à une autre expansion volumétrique du fluide réfrigérant.

10. Ensemble évaporateur (1) selon l'une des revendications précédentes, dans lequel l'échangeur de chaleur (2) comprend une ou plusieurs parois (28) perpendiculaires à l'axe principal (X-X) adaptées pour identifier un chemin tortueux pour le fluide réfrigérant.

11. Ensemble évaporateur (1) selon l'une des revendications précédentes, dans lequel les bouches de fluide du corps de base (4) sont disposées du même côté, si bien que l'échangeur de chaleur (2) et l'élément de laminage (3) s'étendent parallèlement l'un à l'autre.

12. Ensemble évaporateur (1) selon l'une des revendications précédentes, dans lequel l'élément de laminage (3) comprend une valve d'expansion (3A) comportant une ouverture calibrée qui est du type mécaniquement commandée ou du type électroniquement calibrée.

13. Ensemble évaporateur (1) selon l'une des revendications précédentes, dans lequel l'élément de laminage (3), de préférence du type de valve d'expansion (3A), comprend un corps d'élément (30) engagé avec le corps de base (4), dans lequel le corps d'élément (30) peut être relié fluidiquement au circuit de circulation de fluide réfrigérant et est relié fluidiquement à la bouche d'entrée de corps (41) et à la bouche de sortie de corps (45).

14. Ensemble évaporateur (1) selon l'une des revendications précédentes, dans lequel l'échangeur de chaleur (2) comprend une pluralité de plaques d'échangeur superposées le long de l'axe principal (X-X) pour définir des conduits alternant entre eux par lesquels le fluide réfrigérant et le flux de liquide de refroidissement coulent respectivement.

15. Ensemble évaporateur (1) selon l'une des revendications précédentes, dans lequel les éléments de l'échangeur de chaleur (2) et/ou les éléments du corps de base (4) peuvent être entièrement réunis les uns aux autres par une action de brasage, de préférence dans un autoclave.
